(19) Europäisches Patentamt European Patent Office Office européen des brevets

(11) **EP 4 459 515 A1**

(12) **EUROPEAN PATENT APPLICATION**
published in accordance with Art. 153(4) EPC

(43) Date of publication:
**06.11.2024  Bulletin 2024/45**

(21) Application number: **21969992.3**

(22) Date of filing: **28.12.2021**

(51) International Patent Classification (IPC):
**G06N 20/00** (2019.01)

(52) Cooperative Patent Classification (CPC):
**G06N 20/00**

(86) International application number:
**PCT/JP2021/048834**

(87) International publication number:
**WO 2023/127111 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **KODA, Satoru**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **GENERATION METHOD, GENERATION PROGRAM, AND INFORMATION PROCESSING DEVICE**

(57)    A computer-implemented method includes: generating first data in a domain of definition of one of leaf nodes based on a first tree among trees, each tree hierarchically classifying a plurality of data pertaining to a root node into nodes subordinate to the root node by a random threshold and having a reference number or less of data classified into a leaf node among the nodes; and determining validity of the first data as out-of-distribution data of the plurality of data, the determining based on a first distance from the root node to a leaf node in which the first data is generated and one or more second distances being, for each of one or more second trees different from the first tree, from a root node of the second tree to a node in the second tree of which node a domain of definition includes the first data.

FIG.11

EP 4 459 515 A1

## Description

TECHNICAL FIELD

The embodiment(s) discussed herein is a generation method, a generation program, and an information processing device.

BACKGROUND ART

As one of anomaly detection algorithms that detect abnormal data from multiple data, iF (Isolation Forest) has been known.

The scheme of iF obtains an index indicating "likelihood of out-of-distribution" of each data in a distribution of multiple data, using a tree (iT: Isolation Tree) that isolates (partitions) the multiple data into individual data on the basis of variables in the data. Data out of the distribution is a data (hereinafter sometimes referred to as "out-of-distribution data") with a different distribution (e.g. deviated) from the distribution of the multiple data.

CITATION LIST

PATENT DOCUMENT

[Patent Document 1] International Publication Pamphlet No. WO2021-095101

SUMMARY OF THE INVENTION

PROBLEMS TO BE SOLVED BY THE INVENTION

The machine learning algorithm may be vulnerable to out-of-distribution data. For example, when out-of-distribution data is input into a machine learning model trained with multiple data with a predetermined distribution, an inappropriate determination result may be outputted from the machine learning model.

In order to suppress erroneous determination of the machine learning algorithm, one of the solutions may cause, by using out-of-distribution data generated in a pseudo manner (hereinafter sometimes referred to as "pseudo out-of-distribution data"), a machine learning model to lean that the pseudo out-of-distribution data is "data out of a distribution". For example, it is assumed that an index indicating "likelihood of out-of-distribution" that can be obtained from an iF is used to generate pseudo out-of-distribution data.

However, since, in an iF, variables to be partitioned in data (which variables are to be partitioned) and a threshold of the partitioning are determined at random, the index indicating likelihood of out-of-distribution of even the same data may be different with each tree. Therefore, out-of-distribution data generated in a pseudo manner on the basis of an index indicating likelihood of out-of-distribution may be pseudo out-of-distribution data that is inappropriate (not valid) for training a machine learning model, and thus the efficiency of generating out-of-distribution data may be lowered.

As one of the aspects, one of the objects of the present invention is to improve the efficiency in generating out-of-distribution data.

MEANS TO SOLVE THE PROBLEM

According to an aspect of the embodiment(s), a computer-implemented generation method includes: generating first data in a domain of definition of one of a plurality of leaf nodes based on a first tree among a plurality of trees, each tree hierarchically classifying a plurality of data pertaining to a root node into nodes subordinate to the root node by a random threshold and having a reference number or less of data classified into a leaf node among the plurality of nodes; and determining validity of the first data as out-of-distribution data of the plurality of data, the determining based on a first distance and one or more second distances, the first distance being from the root node to a leaf node in which the first data is generated, the one or more second distances being, for each of one or more second trees being different from the first tree, from a root node of the second tree to a node in the second tree of which node a domain of definition includes the first data.

EFFECT OF THE INVENTION

As one aspect, it is possible to enhance the efficiency in generating out-of-distribution data.

BRIEF DESCRIPTION OF DRAWINGS

FIG. 1 is a diagram illustrating an example of out-of-distribution data;
FIG. 2 is a diagram illustrating an example of data partitioning, using a tree;
FIG. 3 is a diagram illustrating an example of expressing the partitioning of FIG. 2 in a tree form;
FIG. 4 is a diagram illustrating another example of data partitioning, using a tree;
FIG. 5 is a block diagram illustrating an example of a hardware (HW) configuration of a computer that achieves the function of a generation device according to an embodiment;
FIG. 6 is a block diagram illustrating an example of a functional configuration of the generation device according to the embodiment;
FIG. 7 is a diagram illustrating an example of a histogram of a distribution density of pls (Path Lengths);
FIG. 8 is a diagram illustrating an example of deriving a depth d by estimating a distribution density of pls;
FIG. 9 is a diagram illustrating an example of out-of-distribution data generated by using a tree for data generation;
FIG. 10 is a diagram illustrating an example of out-of-distribution data in a tree for data evaluation; and
FIG. 11 is a flow diagram illustrating an example of operation in the generation device according to the embodiment.

DESCRIPTION OF EMBODIMENT(S)

Hereinafter, an embodiment will now be described with reference to the accompanying drawings. However, the embodiment described below is merely illustrative and is not intended to exclude the application of various modifications and techniques not explicitly described below. For example, the present embodiment can be variously modified and implemented without departing from the scope thereof. In the drawings to be used in the following description, the same reference numbers denote the same or similar parts unless otherwise described.

(1) Embodiment:

(1-1) Description of Out-of-Distribution data:

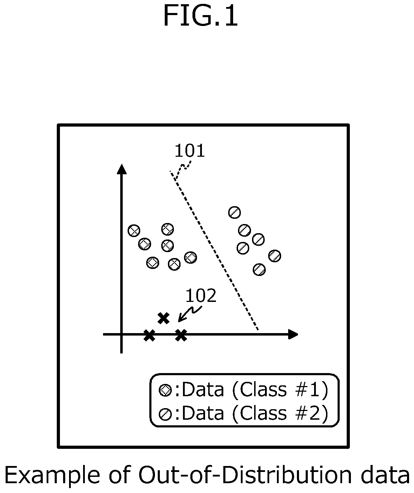

FIG. 1 is a diagram illustrating an example of out-of-distribution data. As illustrated in FIG. 1, it is assumed that a machine learning model is trained with training data containing multiple data with a first distribution and multiple data with a second distribution so as to separate a class #1 from a class #2 at a discrimination boundary 101. Note that the class #1 is classification corresponding to data pertaining to the first distribution, and the class #2 is classification corresponding to data pertaining to the second distribution.
For example, when a sample of a domain not included in training data (out-of-distribution data 102) is inputted, the machine learning algorithm may classify the data 102 into the class #1 with a high confidence level since the data 102 is located on the side of the class #1 on the basis of the discrimination boundary 101.
If the data 102 is a data for a cyber attack, classifying the data 102 into the class #1 means that the attack is unnoticed. In order to prevent such an attack from being missed, it is conceivable to cause the machine learning model to learn that the data 102 is "data being out of a distribution" by generating out-of-distribution data like the data 102 in a pseudo manner and training the machine learning model.
In one embodiment, as a scheme to generate out-of-distribution data, a scheme of iF that partitions multiple data into individual data by a tree (iT) is used.

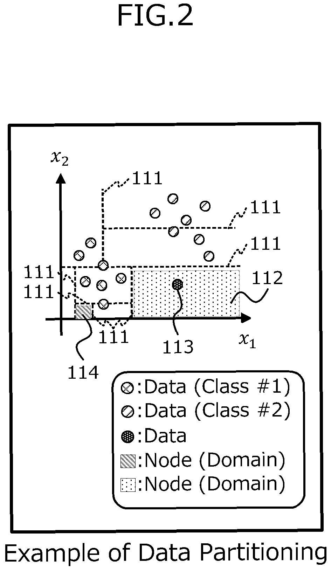

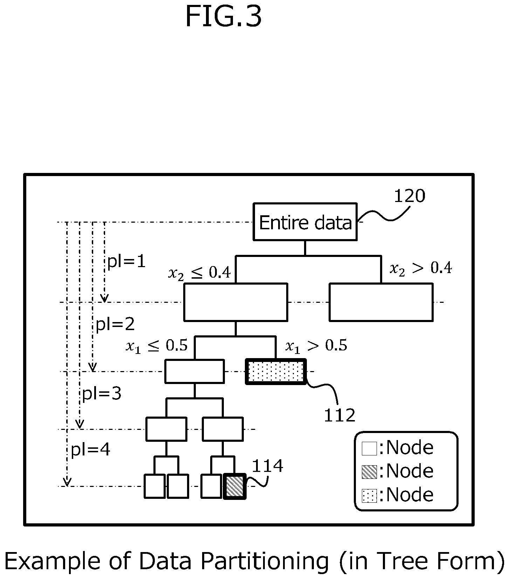

FIG. 2 is a diagram illustrating an example of data partitioning, using a tree, and FIG. 3 is a diagram illustrating an example of expressing the partitioning of FIG. 2 in a tree form.
A tree is a one in which variables to be partitioned (which variables are to be partitioned) and thresholds of the partitioning are random. In the one embodiment, as illustrated in FIG. 2, variables $x_1$ and $x_2$ (refer to the horizontal axis and the vertical axis, respectively) are assumed to be selected as the variables from among multiple variables included in data 120 (refer to FIG. 3). In addition, predetermined values (see reference number 111) in the variable $x_1$ or $x_2$ is assumed to be selected as thresholds as indicated by dashed lines.
For example, as illustrated in FIG. 3, the iF repeats a procedure of selecting a node, selecting variables and thresholds, and partitioning the selected node into multiple (e.g., two) nodes using the selected variables and thresholds until the data (sample) stored in each node comes to be one. A node means a box being included in the tree and storing data satisfying a condition, is a domain segmented by thresholds 111 or the axis in FIG. 2 and, is square frame in FIG. 3. The initial state of a node may include entire data 120 as illustrated in FIG. 3.
As the above, the iF includes multiple trees each of which hierarchically classifies multiple data pertaining to a root node into subordinate nodes to the root node by random threshold(s). In addition, the number of data classified into the terminal (lowest) leaf node among the multiple nodes is a reference value or less. In one embodiment, the reference value is assumed to be "one", but the reference value is not limited to this. Alternatively, the reference number may be "two" or more.

In the example of FIG. 3, the iF selects the variable $x_2$ and threshold "0.4" and partitions the nodes of the entire data 120 (root node) into nodes including data satisfying $x_2 \leq$ "0.4" and nodes including data satisfying $x_2 >$ "0.4". Furthermore, the iF selects a variable $x_1$ and a threshold "0.5" for a node including data satisfying $x_2 \leq$ "0.4", and partitions the node into a node including data satisfying $x_1 \leq$ "0.5" and a node 112 including data satisfying $x_1 >$ "0.5".

The iF terminates the partitioning of the node 112 because the number of data (data 113; see FIG. 2) present in the node 112 including data satisfying $x_1 >$ "0.5" comes to be one. The node 112 that has complete partitioning may be referred to as a leaf node. The iF proceeds with the division for the node including data satisfying $x_1 \leq$ "0.5" and divides the node into the leaf nodes of the node 114 etc. by the same procedure. When the iF partitions each of entire data 120 into leaf nodes, the process ends.

The iF may include, for example, multiple machine learning models (hereinafter sometimes referred to as "tree models") that generate trees. A tree model is a one for generating a tree by repetitiously carrying out a process of selecting a variable and a threshold and partitioning data (node) until the partitioning of the entire data to be inputted ends (reaches leaf nodes). In one embodiment, it is assumed that multiple tree models that the iF includes select the same combination of the same variables (e.g., two variables $x_1$ and $x_2$). The number of variables may be three or more or one.

In the iF, the number of nodes (including the root node) passing from the root node to the leaf node, in other words, the distance from the root node to the leaf node, is referred to as a pl (Path Length) or the "depth of the leaf node". In the example of FIG. 3, a leaf node 112 has a pl="2" and a leaf node 114 has a pl="4".

For example, in FIG. 2, the reference number 112 denotes a relatively "sparse" domain. A "sparse" domain becomes a shallow leaf node, in other words, has a relatively small pl because the node partitioning ends relatively early (the number of times of partitioning is small). On the other hand, the reference number 114 denotes a relatively "dense" domain. A "dense" domain becomes a deep leaf node, in other words, has a relatively large pl because the node partitioning ends relatively late (the number of times of partitioning is large).

As the above, a pl can be regarded as an example of an index indicating the likelihood of out-of-distribution of each data in the distribution of the entire data 120.

Here, it is assumed that a computer, such as a server, that generates pseudo out-of-distribution data is caused to generate the pseudo out-of-distribution data by means of the iF. A scheme of generating pseudo out-of-distribution data is assumed to include, for example, the following steps (i) to (iii).

(i) The server selects a depth d of the node that generates the pseudo out-of-distribution data.
(ii) The server selects a tree in the iF and a leaf node with a depth d at random.
(iii) The server generates data (sample) uniformly at randomly in the domain (a domain of definition) of the selected leaf node.

As described above, since a node having a small pl, in other words, a node having a shallow position on the tree is a "sparse" domain, a data generated uniformly at random in a node having a small depth d is a sample that is likely to be out-of-distribution (i.e., having a high possibility of being out-of-distribution). On the other hand, since a node having a large pl, in other words, a node having a deep position on the tree is a "dense" domain, data generated uniformly at random in a node having a large depth d is a sample likely to be in-distribution (i.e., having a high possibility of being in-distribution).

Accordingly, if the server can select an appropriate depth d (in other words, a predetermined criterion) in the step (i), the server can generate appropriate out-of-distribution data in the steps (ii) and (iii).

Here, appropriate out-of-distribution data may mean out-of-distribution data that has a possibility of being erroneously classified into a class of the in-distribution data by a machine learning mode trained without using out-of-distribution data (with data within the distribution), for example. The generated out-of-distribution data is used for training a machine learning model. Accordingly, it is possible to train the machine learning model by using a data set having difficulty in being determined whether to be in-distribution data or out-of-distribution data such that out-of-distribution data is determined (classified) to out-of-distribution data.

However, the iF can obtain the pl of the individual node, but is not assumed to specify the appropriate depth d. For example, if the depth d is too large, the generated sample will be in the distribution. On the other hand, if the depth d is too small, the generated sample, which is out of distribution, clearly exhibits to be out of distribution, resulting in a sample that is unsuitable for training ta machine learning model.

In addition, as described above, the iF uses multiple tree models that select at random both the variable and the threshold. For this reason, pseudo out-of-distribution data generated based on a certain tree may be an inappropriate data (which is hardly said to be likely out of distribution) in multiple other trees.

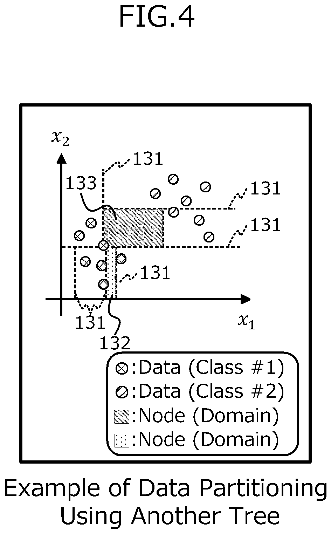

FIG. 4 is a diagram illustrating another example of data partitioning, using a tree. As illustrated in FIG. 4, data is partitioned by thresholds 131 and the axes in the tree.

In the example of FIG. 4, it is assumed that the node (domain) 132 segmented by the thresholds 131 and the axis has a pl="3", and the node (domain) 133 has a pl="4". According to the relationship between the pl value and the likelihood of out-of-distribution, the sample generated in the node 132 having a pl="3" should have a larger index indicating the likelihood of out-of-distribution than that of the sample generated in the node 133 having a pl="4". However, as illustrated in FIG. 4, the randomness of the partitioning may reverse the value of the pl and the likelihood of out-of-distribution.

As the above, the assumed scheme may make it difficult to accomplish one of or both selecting an appropriate depth d based on a tree and determining whether or not the generated sample is valid.

As a solution to the above, the one embodiment describes an example of a scheme for achieving generation of appropriate pseudo out-of-distribution data by enabling selection of an appropriate depth d and determination whether or not the pseudo out-of-distribution data generated in a node at the selected depth d is valid. The following describes both schemes of selection of an appropriate depth d and determination of the validity of the pseudo out-of-distribution data, either of which schemes can generate pseudo out-of-distribution more appropriate than that generated in the above assumed scheme.

(1-2) Example of configuration of Embodiment:

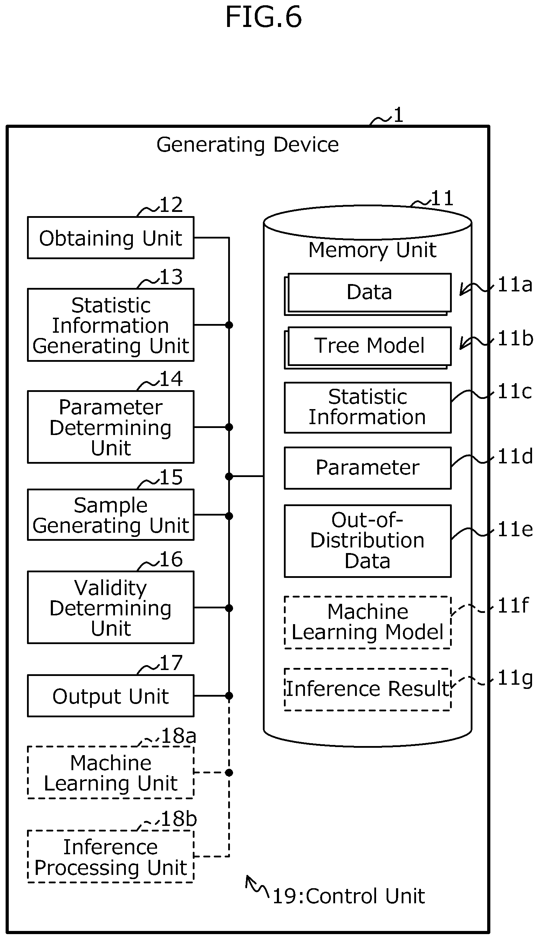

Hereinafter, description will now be made with reference to a generating device 1 (see FIG. 6) that generates pseudo out-of-distribution data serving as an example.

(1-2-1) Example of Hardware configuration:

The generating device 1 according to the one embodiment may be a variety of servers, for example, a virtual server (VM; Virtual Machine) or a physical server. The function of the generating device 1 may be achieved by one computer or by two or more computers. Further, at least a part of the functions of the generating device 1 may be implemented using Hardware (HW) resources and Network (NW) resources provided by cloud environment.

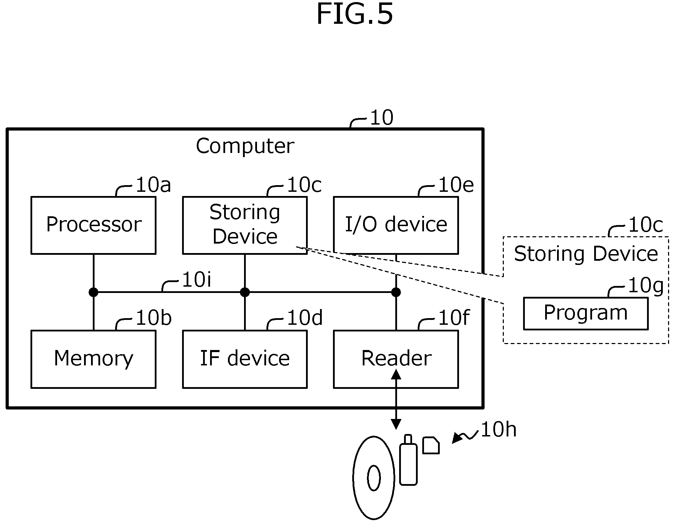

FIG. 5 is a block diagram illustrating an example of a hardware (HW) configuration of a computer 10 that achieves the function of a generation device 1 according to an embodiment. If multiple computers are used as the HW resources for achieving the functions of the generating device 1, each of the computers may include the HW configuration illustrated in FIG. 5.

As illustrated in FIG. 5, the computer 10 may illustratively include, as the HW configuration, a processor 10a, a memory 10b, a storing device 10c, an Interface (IF) device 10d, an Input/Output (I/O) device 10e, and a reader 10f.

The processor 10a is an example of an arithmetic processing device that performs various types of control and calculations. The processor 10a may be mutually communicably connected to each of the blocks in the computer 10 via a bus 10i. The processor 10a may be a multiprocessor including multiple processors or a multi-core processor including multiple processor cores, or may have a structure including multi-core processors.

The processor 10a may be any one of integrated circuits (ICs) such as CPUs, MPUs, GPUs, APUs, DSPs, ASICs, and FPGAs, or combinations of two or more of these ICs. The term CPUs is an abbreviation for Central Processing Units; the term MPUs is an abbreviation for Micro Processing Units; the term GPUs is an abbreviation for Graphics Processing Units; the term APUs is an abbreviation for Accelerated Processing Units, the term DSPs is an abbreviation for Digital Signal Processors; ASICs is an abbreviation for Application Specific Integrated Circuits, and FPGAs is an abbreviation for Field Programmable Gate Arrays.

For example, if the generating device 1 executes a machine learning process in addition to the generation process related to the one embodiment, the processor 10a may be a combination of a processing device such as a CPU that executes the generation process and an accelerator that executes the machine learning process. Examples of the accelerator include the GPUs, APUs, DSPs, ASIC, and FPGA described above.

The memory 10b is an example of HW that stores information such as various data and programs. The memory 10b may be one or both of a volatile memory such as a DRAM (Dynamic Random Access Memory) and a non-volatile memory such as a PM (Persistent Memory).

The storing device 10c is an example of HW that stores information such as various data, programs, and the likes. Examples of the storing device 10c may be various storing devices including a magnetic disk device such as a Hard Disk Drive (HDD), a semiconductor drive device such as a Solid State Drive (SSD), a nonvolatile memory, and the like. The non-volatile memory may be, for example, a flash memory, a Storage Class Memory (SCM), a Read Only Memory (ROM), and the like.

The storing device 10c may store a program 10g (generation program) that implements all or a part of various functions of the computer 10.

For example, the processor 10a of the generating device 1 can achieve the function of the generating device 1 mentioned below (e.g., the control unit 19 illustrated in FIG. 6) by expanding the program 10g stored in the storing device 10c on the memory 10b and executing the expanded program 10g.

The IF device 10d is an example of a communication IF that controls connection and communication between various networks including a network between the generating device 1 and a non-illustrated device. Examples of the IF device 10d are a computer such as a user terminal or a server that provides data to the generating device 1, and a computer such as a server that uses data output from the generating device 1 (for example, that performs machine learning using the data).

For example, the IF device 10d may include an applying adapter conforming to Local Area Network (LAN) such as Ethernet (registered trademark) or optical communication such as Fibre Channel (FC). The applying adapter may be compatible with one or both of wireless and wired communication schemes.

Furthermore, the program 10g may be downloaded from the network to the computer 10 through the communication IF and be stored in the storing device 10c.

The I/O device 10e may include one or both of an input device and an output device. Examples of the input device include a keyboard, a mouse, and a touch panel. Examples of the output device include a monitor, a projector, and a printer. The I/O device 10e may include, for example, a touch panel that integrates an input device and an output device with each other.

The reader 10f is an example of a reader that reads information of data and programs recorded on a recording medium 10h. The reader 10f may include a connecting terminal or device to which the recording medium 10h can be connected or inserted. Examples of the reader 10f include an applying adapter conforming to, for example, Universal Serial Bus (USB), a drive apparatus that accesses a recording disk, and a card reader that accesses a flash memory such as an SD card. The program 10g may be stored in the recording medium 10h. The reader 10f may read the program 10g from the recording medium 10h and store the read program 10g into the storing device 10c.

Examples of the recording medium 10h include a non-transitory computer-readable recording medium such as a magnetic/optical disk, and a flash memory. Examples of the magnetic/optical disk include a flexible disk, a Compact Disc (CD), a Digital Versatile Disc (DVD), a Blu-ray disk, and a Holographic Versatile Disc (HVD). Examples of the flash memory include a semiconductor memory such as a USB memory and an SD card.

The HW configuration of the computer 10 described above is illustrative. Accordingly, the computer 10 may appropriately undergo increase or decrease of HW devices (e.g., addition or deletion of arbitrary blocks), division, integration in an arbitrary combination, or addition or deletion of the bus.

(1-2-2) Example of Functional Configuration:

FIG. 6 is a block diagram illustrating an example of a functional configuration of the generating device 1 according to the embodiment. The generating device 1 is an example of an information processing device or a computer that generates (pseudo) out-of-distribution data.

For example, the generating device 1 may generate out-of-distribution data to be used for training a machine learning model by employing various schemes to obtain an index indicating the likelihood of out-of-distribution of multiple data. In the one embodiment, the above-described iF (Isolation Forest) may be used as an example of a scheme to obtain an index indicating likelihood of out-of-distribution of multiple data.

As illustrated in FIG. 6, the generating device 1 may illustratively include a memory unit 11, an obtaining unit 12, a statistic information generating unit 13, a parameter determining unit 14, a sample generating unit 15, a validity determining unit 16, and an output unit 17. In addition, the generating device 1 may include a machine learning unit 18a, and may further include an inference processing unit 18b. The obtaining unit 12, the statistic information generating unit 13, the parameter determining unit 14, the sample generating unit 15, the validity determining unit 16 and the output unit 17 (and the machine learning unit 18a and the inference processing unit 18b) are examples of a control unit 19.

The memory unit 11 is an example of a storing region and stores various data used by the generating device 1. The memory unit 11 may be achieved by, for example, a storing region that one or both of the memory 10b and the storing device 10c illustrated in FIG. 5.

As illustrated in FIG. 6, the memory unit 11 may illustratively be capable of storing multiple data 11a, multiple tree models 11b, statistic information 11c, a parameter 11d, and out-of-distribution data 11e. In addition, if the generating device 1 includes the machine learning unit 18a, the memory unit 11 may be capable of storing a machine learning model 11f. Furthermore, if the generating device 1 includes the inference processing unit 18b, the memory unit 11 may be capable of storing an inference result 11g. The memory unit 11 may store these information in various formats, for example, a DB (Database), a table, or an array.

The obtaining unit 12 obtains various types of information to be used in the generating device 1. For example, the obtaining unit 12 may receive a request to generate out-of-distribution data from the user terminal.

Further, the obtaining unit 12 may obtain multiple data 11a and an iF including multiple tree models 11b from a device (not illustrated) that provides data, and store the obtained data into the memory unit 11. The multiple data 11a may be included in a generation request.

The generation request may include a request to generate out-of-distribution data of the multiple data 11a. In addition, such generation request may assign, for example, the number (predetermined number) of out-of-distribution data to be generated.

The data 11a is a data including multiple attribute values, and is exemplified by training data used for training a machine learning model. The multiple attributes may be each associated with, for example, one of variables $x_1$, $x_2$, ..., $x_m$ (m is an integer of two or more). In the one embodiment, the multiple data 11a is assumed not to contain out-of-distribution data.

A tree model 11b is a trained machine learning model for generating a tree, e.g., an iT (Isolation Tree). The tree model 11b generates a tree by repeating a process of, for example, selecting a variable and a threshold and partitioning multiple data (nodes) input until partitioning of the entire data inputted is completed (the partitioning reaches a leaf node).

In the one embodiment, each of the multiple tree models 10b is assumed to employ schemes of partitioning, for example, selecting thresholds at random with each of the models while selecting the same variable. As an example, each of the multiple tree models 11b is assumed to have been trained to select, as a variable that specifies the attribute contained in the data 11a, a variable to be compared with the threshold from among two variables of $x_1$ and $x_2$ among multiple variables.

The statistic information generating unit 13 generates statistic information 11c of an index indicating likelihood of out-of-distribution of the data 11a in a predetermined tree obtained by partitioning multiple data 11a into individual data 11a (nodes), and stores the generated statistic information 11c into the memory unit 11. An example of an index indicating likelihood of out-of-distribution of data 11a may be a pl (Path Length). The predetermined tree is an example of a first tree.

The first example of the statistic information 11c includes the average value c(n) of the pls in the predetermined tree (where n is an integer of one or more). For example, the statistic information generating unit 13 may calculate the average value c(n) of pls using the respective pls of the data 11a (nodes) included in the predetermined tree according to Expression (1) below.

$$c(n)=2H(n-1)-(2(n-1)/n) \qquad (1)$$

In the above Expression (1), n represents a unique number of samples, and is exemplified by the total number of data 11a included in a predetermined tree. H(i) (where, i is the argument, i = n-1) is the sum of the natural logarithm ln(i) and the Euler's constant (e.g., "0.5772156649") .

The second example of the statistic information 11c includes a histogram of a distribution density of the pls in the predetermined tree.

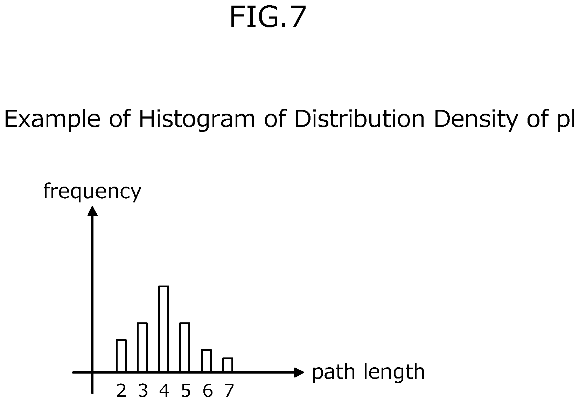

FIG. 7 is a diagram illustrating an example of a histogram of a distribution density of pls. As illustrated in FIG. 7, the statistic information generating unit 13 may calculate (generate) a histogram by accumulating the appearing frequency of the pl values of the multiple data 11a included in a predetermined tree. The appearing frequency of the pl values is, for example, the number of data 11a having a common pl value or the ratio of the number of data 11a having a common pl value to the total number of data 11a.

As an alternative to the second example of the statistic information 11c, the statistic information generating unit 13 may use an average value (average value in the iF) of the pl values of each data 11a in the multiple trees instead of the pl values of the multiple data 11a included in the predetermined tree. In this alternative, the statistic information generating unit 13 may calculate the histogram by using the average value of pls calculated for each data 11a. The method of calculating the average value of the pls for each data 11a may use the above Expression (1), for example.

The parameter determining unit 14 determines a parameter 11d based on the statistic information 11c and stores the parameter into the memory unit 11. An example of the parameter 11d is a depth d (first distance) of a node included in the tree.

For example, the parameter determining unit 14 may determine, based on the statistic information 11c, a pl among the pls of the multiple data 11a included in the predetermined tree as the depth d.

As the first example, when the statistic information 11c is the average value c(n), the parameter determining unit 14 may calculate the depth d in obedience to the following Expression (2).

$$d=int(\alpha c(n)) \qquad (2)$$

In the above Expression (2), $\alpha$ represents a coefficient of "0" or more and "1" or less. As one example, $\alpha$ may be "0.5". In addition, int() represents a function outputting the largest integer not exceeding the argument.

As the above manner, in the first example, the parameter determining unit 14 derives an appropriate depth d by using $\alpha$ times the average pl value (round down after the decimal point), which is an index easily understood by users.

As a second example, when the statistic information 11c is a histogram, the parameter determining unit 14 may calculate the depth d by using the cumulative point of the density of the histogram.

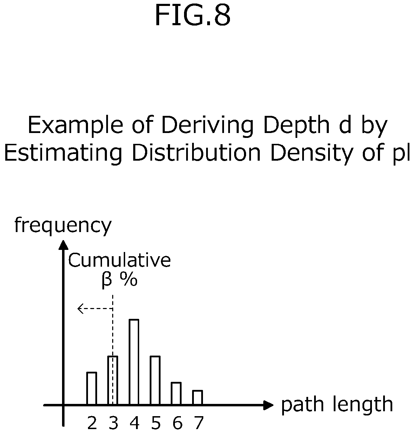

FIG. 8 is a diagram illustrating an example of deriving a depth d by estimating a distribution density of pls. As illustrated in FIG. 8, the parameter determining unit 14 may select, as the depth d, the value of the pl at the point of the cumulative β % in the histogram (see FIG. 7) of the distribution density of the pls. β is a factor of "0" or more "100" or less. As an example, β may be "20".

For example, the value of the pl at the point of cumulative β % means the value of the pl when the cumulative value of the appearing frequency of pls reaches β %. In the example of FIG. 8, the parameter determining unit 14 accumulates the appearing frequency of pls sequentially from the small pls, and selects "3", which is the value of the pl when the cumulative value reaches β %, as the depth d. Alternatively, the parameter determining unit 14 may accumulate the appearing frequency of pls sequentially from the large pls and select the value a pl when the pl when the cumulative value reaches β %.

As the above manner, in the second example, the parameter determining unit 14 derives an appropriate depth d by selecting a pl at the cumulative β % in estimating the distribution density of the pls, which is an index easily understood by users.

With reference to the parameter 11d determined by the parameter determining unit 14, the sample generating unit 15 generates a sample in a domain of definition of a node depending on the parameter 11d.

For example, the sample generating unit 15 may select a node depending on the depth d indicated by the parameter 11d from the predetermined (first) tree and specify a domain of definition of the selected node. An example of a domain of definition may be a range of a variable of a node having a value of the pl matching the depth d (a node located at the depth d). As an example, a domain of definition of the selected node is a range determined by the lower limit value and the upper limit of the variable $x_1$ of the node, and the lower limit value and the upper limit of the variable $x_2$ of the node. The lower limit and the upper limit of each variable can be specified by a threshold selected when the tree model 11b partitions the multiple data 11a.

Then, the sample generating unit 15 generates out-of-distribution data (first data) uniformly at random that is to serve as samples in the range of the domain of definition specified from the node. As an example, the sample generating unit 15 may generate, as the out-of-distribution data, a combination of variables $x_1$ of the lower limit or more and also the upper limit of less and variables $x_2$ of the lower limit or more and also the upper limit or less.

The validity determining unit 16 determines whether or not the out-of-distribution data generated by the sample generating unit 15 using the predetermined tree is valid out-of-distribution data.

For example, the validity determining unit 16 may evaluate the validity of the out-of-distribution data on the basis of one or more (second) trees among the multiple trees included in the iF. The one or more trees are trees except for the predetermined (first) tree used to generate the out-of-distribution data. Hereinafter, the first tree is sometimes referred to as a "tree for data generation," and each of the one or more second trees is sometimes referred to as a "tree for data evaluation."

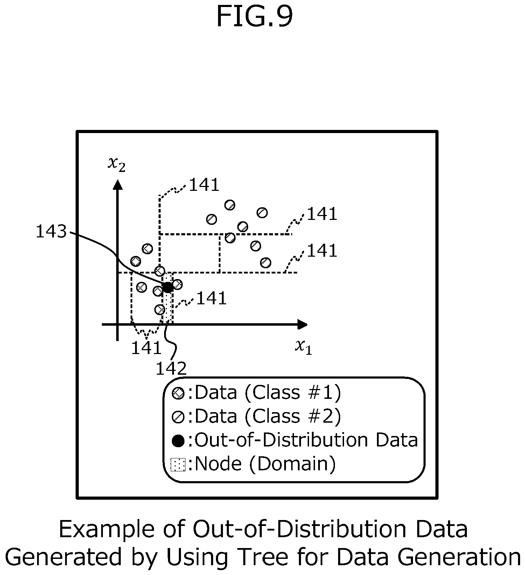

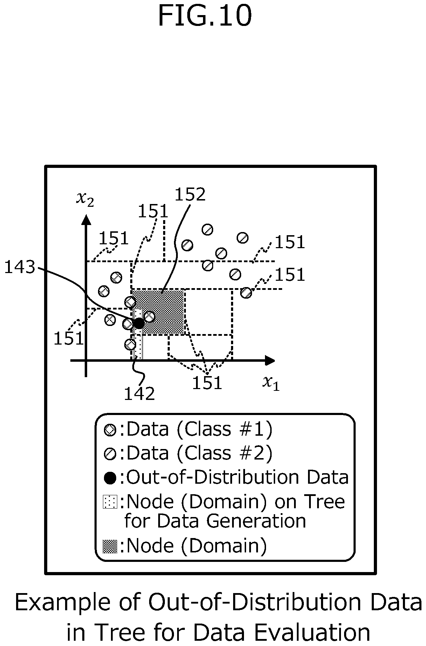

FIG. 9 is a diagram illustrating an example of out-of-distribution data generated by using a tree for data generation, and FIG. 10 is a diagram illustrating an example of out-of-distribution data in a tree for data evaluation.

Hereinafter, it is assumed that the sample generating unit 15 generates out-of-distribution data 143 in a node 142 corresponding to a depth d in a tree for data generation including multiple leaf nodes segmented by the thresholds 141 and the axes as illustrated in FIG. 9.

For example, the validity determining unit 16 determines to which depth (pl; second distance) of a leaf node in the tree for data evaluation the value of the out-of-distribution data 143 (the values of the variable $x_1$ and the value of $x_2$) corresponds.

As an example, the validity determining unit 16 may compare the average value of the pls of leaf nodes to which the out-of-distribution data 143 pertains in the tree for data evaluation with the depth d of the parameter 11d.

In the example of FIG. 10, the tree for data evaluation includes multiple leaf nodes segmented by thresholds 151 and the axes. Due to the randomness of partitioning on the data 11a in each tree, the domain of definition of each leaf node of the tree for data evaluation is different from the domain of definition of each leaf node of the tree for data generation.

Therefore, mapping the out-of-distribution data 143 on the tree for data evaluation causes the out-of-distribution data 143 to pertain to a node of a domain of definition different from that of the node 142 on the tree for data generation.

For example, the validity determining unit 16 obtains the pl of the node 152 that the out-of-distribution data 143 pertains to by comparing the value of the out-of-distribution data 143 with the domain of definition of each node included in the tree for data evaluation. For example, the validity determining unit 16 may obtain the pl of the node 152 that the out-of-distribution data 143 pertains to for each of the one or more tree for data evaluation.

Then, for example, the validity determining unit 16 calculates an average value of one or more pls obtained one from each of the one or more trees for data evaluation, and compares the calculated average value with the depth d. For example, the validity determining unit 16 may determine whether the difference between the calculated average value and the depth d is the threshold γ or more. As a method of calculating the average value of one or more pls, the above Expression (1) may be used, for example. The threshold γ is an integer of "1" or more, and may be a value of "3", for example.

If the difference between the calculated average value and the depth d is the threshold γ or more, it can be said that the out-of-distribution data 143 generated from the tree for data generation on the basis of the depth d is data of an inappropriate depth in another tree. For example, if the depth d is greater by $\gamma$ or more than the average value, the out-of-distribution data 143 has a high possibility of being in-distribution in one or more trees for data evaluation. Also, if the depth d is smaller by $\gamma$ or more than the average value, the out-of-distribution data 143 is a sample not suitable for training a machine learning model because apparently being out-of-distribution although being out-of-distribution in one or more trees for data evaluation.

Therefore, if the difference between the calculated average value and the depth d is the threshold $\gamma$ or more, the validity determining unit 16 may determine that the out-of-distribution data generated by the sample generating unit 15 is inappropriate data (not valid). On the other hand, if the difference between the calculated average value and the depth d is less than the threshold $\gamma$, the validity determining unit 16 may determine that the out-of-distribution data generated by the sample generating unit 15 is appropriate (valid) out-of-distribution data and store the data, as out-of-distribution data 11e, into the memory unit 11.

If the out-of-distribution data is determined to be inappropriate data, the validity determining unit 16 may, for example, instruct the sample generating unit 15 to generate new (other) out-of-distribution data. In obedience to the generation instruction from the validity determining unit 16, the sample generating unit 15 may specify a node being located at the depth d and being included in the tree for data generation and generate uniformly random out-of-distribution data (second data) in a domain of definition of the specified node. The validity determining unit 16 may evaluate the validity described above each time out-of-distribution data is generated by the sample generating unit 15.

If multiple nodes positioned at the depth d that the parameter 11d indicates are present in the tree for data generation, the sample generating unit 15 may select, as the node that is to generate the second data in a domain of definition thereof, a node different from the node that has generated the first data in a domain of definition thereof.

If multiple nodes positioned at the depth d that the parameter 11d indicates are present in the tree for data generation, the sample generating unit 15 may generate out-of-distribution data in a domain of definition of each of the multiple nodes. In this case, the validity determining unit 16 may evaluate the validity described above for each of multiple out-of-distribution data generated by the sample generating unit 15.

The output unit 17 outputs the output data. An example of the output data is out-of-distribution data 11e that is determined to be appropriate (valid) by the validity determining unit 16. The output data may include multiple data 11a in addition to the out-of-distribution data 11e. Further, the output data may include one or both of a machine learning model 11f and an inference result 11g to be described below.

In "outputting" of the output data, the output unit 17 may transmit (provide) the output data to non-illustrated another computer, or may store the output data in the memory unit 11 and manage it to be obtainable from the generating device 1 or another computer. Alternatively, in the "outputting" of the output data, the output unit 17 may output the information indicating the output data to the screen of the output device of, for example, the generating device 1, or may output the output data in various other ways.

As described above, the generating device 1 may include a machine learning unit 18a, and may further include an inference processing unit 18b.

In the machine learning phase, the machine learning unit 18a executes a machine learning process that trains a machine learning model 11f on the basis of training data including the multiple data 11a and the out-of-distribution data 11e. The machine learning model 11f may be a Neural Network (NN) model that includes parameters having been subjected to machine learning. The machine learning process may be implemented by various known techniques. For example, by using the out-of-distribution data 11e generated in a pseudo manner for training the machine learning model 11f, the machine learning unit 18a can cause the machine learning model 11f to learn that the out-of-distribution data 11e is "data being out of a distribution".

In the inference phase, the inference processing unit 18b performs an inference process, using machine learning model 11f trained on the basis of the out-of-distribution data 11e. For example, the inference processing unit 18b inputs data (not illustrated) to be subjected to the inference process into the machine learning model 11f, and stores the inference result 11g outputted from the machine learning model 11f in the memory unit 11.

(1-3) Example of Operation:

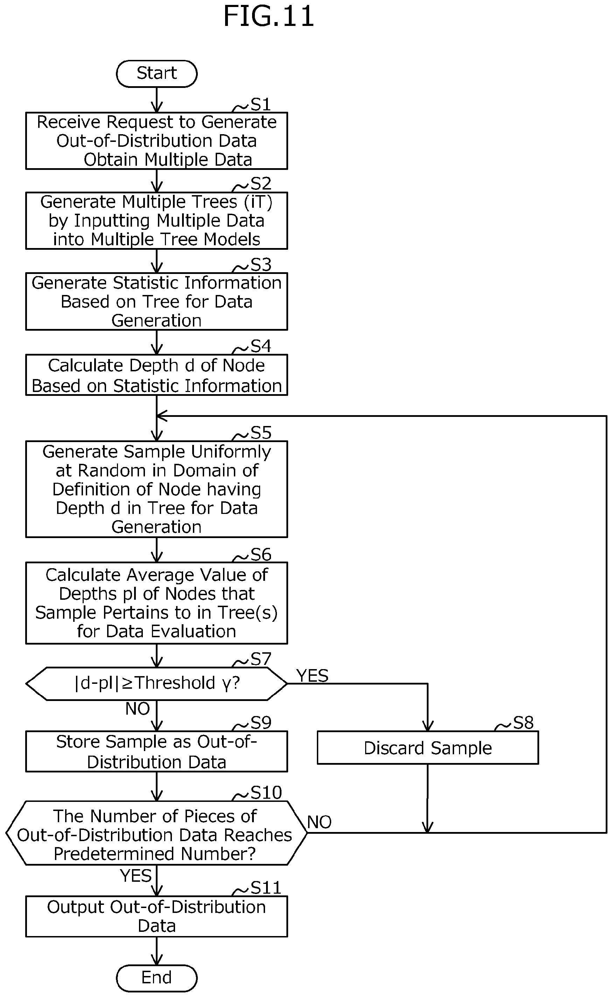

Next, description will now be made in relation to an example of operation of the generation device 1 according to the embodiment. FIG. 11 is a flow diagram illustrating an example of operation in a generating device 1 according to an embodiment. It is assumed that the generating device 1 stores the trained iF (multiple tree models 11b) in the memory unit 11 in advance.

As illustrated in FIG. 11, the obtaining unit 12 of the generating device 1 receives a request to generate the out-of-distribution data 11e. Further, the obtaining unit 12 obtains multiple data 11a (Step S1).

The statistic information generating unit 13 inputs a data set of multiple data 11a into each of the multiple tree models 11b, and generates multiple trees (iTs) (Step S2).

The statistic information generating unit 13 selects one of the multiple generated trees as the tree for data generation, and generates statistic information 11c based on the selected tree for data generation (Step S3).

The parameter determining unit 14 calculates, based on the statistic information 11c, a depth d of a node in the tree for data generation as the parameter 11d (Step S4).

The sample generating unit 15 generates a sample (out-of-distribution data 11e) uniformly at random in a domain of definition of the node positioned at the depth d in the tree for data generation (step S5).

The validity determining unit 16 obtains the depth pl of the node to which the sample generated in Step S5 pertains in each of the one or more trees for data evaluation, which are among the multiple trees excluding the tree for data generation, and calculates the average value of the depths pls of the trees (Step S6).

The validity determining unit 16 determines whether or not the absolute value of the difference between the depth d and the calculated average value of the pls is the threshold γ or more (Step S7).

If the absolute value of the difference is the threshold γ or more (YES in Step S7), the validity determining unit 16 discards the sample generated in Step S5 (Step S8), and the process proceeds to Step S5. In this case, the sample generating unit 15 generates a sample (out-of-distribution data 11e) uniformly at random in domain of definition of a node at a depth d in the tree for data generation. If multiple nodes positioned at the depth d are present in the tree for data generation, the sample generating unit 15 may select a node different from the node in which the sample generating unit 15 has generated a sample before.

In Step S7, if the absolute value of the difference is less than the threshold γ (NO in Step S7), the validity determining unit 16 stores the sample generated in Step S5 as the out-of-distribution data 11e into the memory unit 11 (Step S9).

Then, the validity determining unit 16 determines whether or not the number of the out-of-distribution data 11e has reached a predetermined number, for example, the number to be generated specified by the generation request (Step S10). If the number of the out-of-distribution data 11e has not reached the predetermined number (NO in Step S10), the process proceeds to Step S5.

If the number of the out-of-distribution data 11e has reached the predetermined number (YES in step S10), the process proceeds to Step S11.

In Step S11, the output unit 17 outputs the generated out-of-distribution data 11e, and the process ends.

(1-4) Effect of Embodiment:

In the generating device 1 according to the one embodiment, the control unit 19 generates a sample (out-of-distribution data) in a domain of definition of one of multiple leaf nodes on the basis of the tree for data generation. Further, the control unit 19 determines the validity that the sample is out-of-distribution data of multiple data 11a on the basis of the pl (depth d) of the sample in the tree for data generation and one or more pls of the node containing a sample in a domain of definition thereof in each of the one or more trees for data evaluation.

Thereby, the generating device 1 can ensure that the sample generated at the depth d in the tree for data generation is likely to be data at the depth d in each of the trees for data evaluation. This can enhance the efficiency in generation of out-of-distribution data by the generating device 1.

Furthermore, in the generating device 1 according to the one embodiment, the control unit 19 selects the depth d from among multiple distances on the basis of statistic information 11c of multiple distances (pls) from the root node of the tree for data generation to multiple leaf nodes.

Thereby, the generating device 1 can derive an appropriate depth d of the node to be used to generate the out-of-distribution data 11e. This can enhance the efficiency in generation of out-of-distribution data by the generating device 1.

Furthermore, in the one embodiment, an iF may be used to generate the out-of-distribution data 11e. An iF is applicable to a variety of tabular data. In addition, the tree-system algorithm does not require data preprocessing such as nominal-variable encoding processing and normalization processing. Therefore, this algorithm can extend the type of data that can adopt the scheme of generating the out-of-distribution data 11e as compared with other schemes of density estimation such as kernel density estimation.

(2) Miscellaneous:

The technique according to the one embodiment described above can be implemented by changing or modifying as follows.

For example, the obtaining unit 12, the statistic information generating unit 13, the parameter determining unit 14, the sample generating unit 15, the validity determining unit 16, and the output unit 17 (and the machine learning unit 18a and the inference processing unit 18b) included in the generating device 1 illustrated in FIG. 6 are combined in any combination or divided into each.

In addition, the generating device 1 illustrated in FIG. 6 may have a configuration (system) that achieves each processing function by multiple devices cooperating with one another via a network. As an example, the memory unit 11 may be a DB server, the obtaining unit 12 and the output unit 17 may be a Web server or an application server, and the statistic information generating unit 13, the parameter determining unit 14, the sample generating unit 15, the validity determining unit 16, the machine learning unit 18a and the inference processing unit 18b may be an application server. In this case, each of the processing functions as the generating device 1 may be achieved by the DB server, the application server, and the web server cooperating with one another via a network.

REFERENCE SIGNS LIST

1: generating device
10: computer
11: memory unit
11a: data
11b: tree model
11c: statistic information
11d: parameter
11e: out-of-distribution data
11f: machine learning model
11g: inference result
12: obtaining unit
13: statistic information generating unit
14: parameter determining unit
15: sample generating unit
16: validity determining unit
17: outputting unit
18a: machine learning unit
18b: inference processing unit
19: control unit

**Claims**

1. A computer-implemented generation method comprising:

   generating first data (11e) in a domain of definition of one of a plurality of leaf nodes based on a first tree among a plurality of trees, each tree hierarchically classifying a plurality of data (11a) pertaining to a root node into nodes subordinate to the root node by a random threshold and having a reference number or less of data classified into a leaf node among a plurality of the nodes; and
   determining validity of the first data (11e) as out-of-distribution data of the plurality of data (11a), the determining based on a first distance and one or more second distances, the first distance being from the root node to a leaf node in which the first data (11e) is generated, the one or more second distances being, for each of one or more second trees being different from the first tree, from a root node of the second tree to a node in the second tree of which node a domain of definition includes the first data (11e).

2. The computer-implemented generation method according to claim 1, wherein
   the determining of the validity comprises determining, when a difference between the first distance and an average value of the one or more second distances is less than a threshold, that the first data (11e) as out-of-distribution data is valid, and when the difference is the threshold or more, that the first data (11e) as out-of-distribution data is invalid.

3. The computer-implemented generation method according to claim 1 or 2, further comprising:

   when the determining of the validity determines that the first data (11e) as out-of-distribution data is invalid, generating, in a domain of definition of a leaf node depending on the first distance in the first tree, second data (11e) different from the first data (11e), and
   determining validity of the second data (11e) as out-of-distribution data of the plurality of data (11a).

4. The computer-implemented generation method according to any one of claims 1-3, further comprising selecting, based on statistic information (11c) of a plurality of distances each from the root node of the first tree to one of the plurality of leaf nodes of the first tree, the first distance from among the plurality of distances.

5. The computer-implemented generation method according to claim 4, wherein

the statistic information (11c) is an average value of the plurality of distances in the first tree, and
the selecting of the first distance comprises calculating the first distance based on the average value of the plurality of distances.

6. The computer-implemented generation method according to claim 4, wherein

the statistic information (11c) is a histogram of a distribution density of the plurality of distances in the first tree, and
the selecting of the first distance comprises setting, as the first distance, a distance corresponding an appearing frequency at which a cumulative value of appearing frequencies of distances in the histogram reaches a predetermined value.

7. A generation program for causing a computer to execute a process comprising:

generating first data (11e) in a domain of definition of one of a plurality of leaf nodes based on a first tree among a plurality of trees, each tree hierarchically classifying a plurality of data (11a) pertaining to a root node into nodes subordinate to the root node by a random threshold and having a reference number or less of data classified into a leaf node among a plurality of the nodes; and
determining validity of the first data (11e) as out-of-distribution data of the plurality of data (11a), the determining based on a first distance and one or more second distances, the first distance being from the root node to a leaf node in which the first data (11e) is generated, the one or more second distances being, for each of one or more second trees being different from the first tree, from a root node of the second tree to a node in the second tree of which node a domain of definition includes the first data (11e).

8. The generation program according to claim 7, wherein
the determining of the validity comprises determining, when a difference between the first distance and an average value of the one or more second distances is less than a threshold, that the first data (11e) as out-of-distribution data is valid, and when the difference is the threshold or more, that the first data (11e) as out-of-distribution data is invalid.

9. The generation program according to claim 7 or 8, wherein the process further comprises:

when the determining of the validity determines that the first data (11e) as out-of-distribution data is invalid, generating, in a domain of definition of a leaf node depending on the first distance in the first tree, second data (11e) different from the first data (11e), and
determining validity of the second data (11e) as out-of-distribution data of the plurality of data (11a).

10. The generation program according to any one of claims 7-9, wherein the process further comprises:
selecting, based on statistic information (11c) of a plurality of distances each from the root node of the first tree to one of the plurality of leaf nodes of the first tree, the first distance from among the plurality of distances.

11. The generation program according to claim 10, wherein

the statistic information (11c) is an average value of the plurality of distances in the first tree, and
the selecting of the first distance comprises calculating the first distance based on the average value of the plurality of distances.

12. The generation program according to claim 10, wherein

the statistic information (11c) is a histogram of a distribution density of the plurality of distances in the first tree, and
the selecting of the first distance comprises setting, as the first distance, a distance corresponding an appearing frequency at which a cumulative value of appearing frequencies of distances in the histogram reaches a predetermined value.

**13.** An information processing device comprising:

a control unit (19) that
generates first data (11e) in a domain of definition of one of a plurality of leaf nodes based on a first tree among a plurality of trees, each tree hierarchically classifying a plurality of data (11a) pertaining to a root node into nodes subordinate to the root node by a random threshold and having a reference number or less of data classified into a leaf node among a plurality of the nodes; and
determines, based on a first distance and one or more second distances, validity of the first data (11e) as out-of-distribution data of the plurality of data (11a), the first distance being from the root node to a leaf node in which the first data (11e) is generated, the one or more second distances being, for each of one or more second trees being different from the first tree, from a root node of the second tree to a node in the second tree of which node a domain of definition includes the first data (11e).

**14.** The information processing device according to claim 13, wherein,
when determining the validity, the control unit (19) determines, when a difference between the first distance and an average value of the one or more second distances is less than a threshold, that the first data (11e) as out-of-distribution data is valid, and when the difference is the threshold or more, that the first data (11e) as out-of-distribution data is invalid.

**15.** The information processing device according to claim 13 or 14, wherein the control unit (19) further

generates, when the determining of the validity determines that the first data (11e) as out-of-distribution data is invalid, in a domain of definition of a leaf node depending on the first distance in the first tree, second data (11e) different from the first data (11e), and
determines validity of the second data (11e) as out-of-distribution data of the plurality of data (11a).

**16.** The information processing device according to any one claims 13-15, wherein
the control unit (19) further selects, based on statistic information (11c) of a plurality of distances each from the root node of the first tree to one of the plurality of leaf nodes of the first tree, the first distance from among the plurality of distances.

**17.** The information processing device according to claim 16, wherein

the statistic information (11c) is an average value of the plurality of distances in the first tree, and
the control unit (19) further calculates, when the first distance is selected, the first distance based on the average value of the plurality of distances.

**18.** The information processing device according to claim 16, wherein

the statistic information (11c) is a histogram of a distribution density of the plurality of distances in the first tree, and
the control unit (19) further sets, when the first distance is selected, as the first distance, a distance corresponding an appearing frequency at which a cumulative value of appearing frequencies of distances in the histogram reaches a predetermined value.

# FIG.1

Example of Out-of-Distribution data

# FIG.2

Example of Data Partitioning

# FIG.3

Example of Data Partitioning (in Tree Form)

# FIG.4

Example of Data Partitioning
Using Another Tree

# FIG.5

Computer 10

Processor 10a
Storing Device 10c
I/O device 10e
Memory 10b
IF device 10d
Reader 10f
10i

Storing Device 10c
Program 10g

10h

# FIG.6

~1

**Generating Device**

~12
Obtaining Unit

~13
Statistic Information Generating Unit

~14
Parameter Determining Unit

~15
Sample Generating Unit

~16
Validity Determining Unit

~17
Output Unit

~18a
Machine Learning Unit

~18b
Inference Processing Unit

~11
**Memory Unit**

Data — 11a

Tree Model — 11b

Statistic Information — 11c

Parameter — 11d

Out-of-Distribution Data — 11e

Machine Learning Model — 11f

Inference Result — 11g

19:Control Unit

# FIG.7

Example of Histogram of Distribution Density of pl

# FIG.8

## Example of Deriving Depth d by Estimating Distribution Density of pl

# FIG.9

Example of Out-of-Distribution Data
Generated by Using Tree for Data Generation

# FIG.10

Example of Out-of-Distribution Data
in Tree for Data Evaluation

# FIG.11

Start

~S1
Receive Request to Generate
Out-of-Distribution Data
Obtain Multiple Data

~S2
Generate Multiple Trees (iT)
by Inputting Multiple Data
into Multiple Tree Models

~S3
Generate Statistic Information
Based on Tree for Data
Generation

~S4
Calculate Depth d of Node
Based on Statistic Information

~S5
Generate Sample Uniformly
at Random in Domain of
Definition of Node having
Depth d in Tree for Data
Generation

~S6
Calculate Average Value of
Depths pl of Nodes that
Sample Pertains to in Tree(s)
for Data Evaluation

~S7
$|d-pl| \geq$ Threshold γ?

YES

NO

~S9
Store Sample as Out-of-
Distribution Data

~S8
Discard Sample

~S10
The Number of Pieces of
Out-of-Distribution Data Reaches
Predetermined Number?

NO

YES

~S11
Output Out-of-Distribution
Data

End

## INTERNATIONAL SEARCH REPORT

| | International application No. |
|---|---|
| | **PCT/JP2021/048834** |

**A. CLASSIFICATION OF SUBJECT MATTER**

*G06N 20/00*(2019.01)i
FI: G06N20/00

According to International Patent Classification (IPC) or to both national classification and IPC

**B. FIELDS SEARCHED**

Minimum documentation searched (classification system followed by classification symbols)

G06N3/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | LIU, Fei Tony et al. Isolation-Based Anomaly Detection. ACM Transactions on Knowledge Discovery from DATA (TKDD). vol. 6, no. 1, article no. 3, ACM, 01 March 2012, pp. 3:1-3:39, <DOI: 10.1145/2133360.2133363>  entire text, all drawings | 1-18 |
| A | WO 2018/105320 A1 (PANASONIC INTELLECTUAL PROPERTY CORPORATION OF AMERICA) 14 June 2018 (2018-06-14) | 1-18 |
| A | 高橋良太ほか. Sand Sprinkled Isolation Forestによる車載セキュリティ向け異常検知の精度向上. 2017年暗号と情報セキュリティシンポジウム(SCIS 2017)概要集. 24 January 2017, pp. 1-6 (1E1-5), non-official translation (TAKAHASHI, Ryota et al. Improving Precision of Anomaly Detection for In-Vehicle Security Using Sand Sprinkled Isolation Forest. Proceedings of the 2017 Symposium on Cryptography and Information Security.)  entire text, all drawings | 1-18 |
| A | JP 2020-3846 A (AZBIL CORP.) 09 January 2020 (2020-01-09) | 1-18 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 March 2022** | **22 March 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/048834**

| Patent document cited in search report | | | Publication date (day/month/year) | Patent family member(s) | | | Publication date (day/month/year) |
|---|---|---|---|---|---|---|---|
| WO | 2018/105320 | A1 | 14 June 2018 | US | 2019/0173902 | A1 | |
| | | | | EP | 3553712 | A1 | |
| | | | | CN | 109074519 | A | |
| JP | 2020-3846 | A | 09 January 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2021095101 A